# EUROPEAN PATENT SPECIFICATION

(11) **EP 4 197 757 B1**
(45) Date of publication and mention of the grant of the patent: **04.11.2026**
(21) Application number: 22212650.0
(22) Date of filing: 09.12.2022
(51) Int. Cl.: B29C 70/44, B29D 99/00, B29C 70/00, B29C 70/30

(54) **METHOD FOR THERMOPLASTIC PANEL MANUFACTURING**
VERFAHREN ZUR HERSTELLUNG VON THERMOPLASTISCHEN PLATTEN
PROCÉDÉ DE FABRICATION DE PANNEAU THERMOPLASTIQUE

(30) Priority: 17.12.2021 US 202117554775
(43) Date of publication of application: 21.06.2023
(73) Proprietor: Rohr, Inc., Chula Vista, CA 91910-2098 (US)
(72) Inventor: TARDY, Shawn, Menifee 92584 (US); BAHRAMSHAHI, Noushin, Mission Viejo 92692 (US); ADAN, Andrew, Corona 92879 (US); RAMOS, Roberto, Moreno Valley 92555 (US); SANNES, Nicole M., Chula Vista 91910-2098 (US)
(74) Representative: Dehns

(56) References cited:
- WO-A1-2021/083712
- DE-A1- 102004 062 064
- US-A- 4 765 942
- US-A- 5 236 646
- US-A- 5 968 445
- US-A1- 2013 143 006

## Description

### FIELD

The present disclosure (invention) relates generally to thermoplastics manufacturing, and more specifically to hot bonding consolidation for manufacturing thermoplastic panels.

### BACKGROUND

Various industries include components having panels for various uses. For example, the aerospace industry utilizes nacelles for various applications for providing a protective housing around adjacent components as well as for providing an aerodynamic surface for reducing drag, among other applications. For example, a fan cowl is used for covering various components of a turbine engine and provides an aerodynamic surface for the turbine engine and related systems. A fan cowl outer skin is typically made from metal or carbon fiber thermoplastic composites. Other aircraft components, large and small, may be manufactured from thermoplastic materials.

WO 2021/083712 A1 discloses a system for manufacturing thermoplastic parts.

US 5 968 445 A discloses a method and apparatus for curing large composite panels.

US 2013/0143006 A1 discloses reducing porosity in composite structures.

DE 10 2004 062 064 A1 discloses production and repair of fiber compound and composite metal components for aircraft, using controlled hot bonding with heating mats for adhesion and lamination.

US 5 236 646 A discloses a process for preparing thermoplastic composites.

US 4 765 942 A discloses a method of consolidating thermoplastic poly(amide-imide) components.

### SUMMARY

A method of manufacturing a thermoplastic panel according to an aspect of the invention is as claimed in claim 1. Embodiments of this aspect of te invention are provided in claims dependent from claim 1.

The foregoing features and elements may be combined in various combinations without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1A illustrates a front-view profile of a stiffened panel half (such as for an aircraft nacelle fan cowl) having a semi-cylindrical geometry, in accordance with various embodiments.
FIG. 1B illustrates a section view of the panel half of FIG. 1A having a rounded geometry, in accordance with various embodiments.
FIG. 2 illustrates a perspective view of a invar mold, in accordance with various embodiments
FIG. 3 provides a flow chart for a method for manufacturing a fiber-reinforced thermoplastic panel, in accordance with various embodiments.
FIG. 4 illustrates a step from the method of FIG. 3, in accordance with various embodiments.
FIG. 5 illustrates a step from the method of FIG. 3, in accordance with various embodiments.
FIG. 6 illustrates a hot bonder system for use in the method from FIG. 3, in accordance with various embodiments.

### DETAILED DESCRIPTION

The detailed description of exemplary embodiments herein refers to the accompanying drawings, which show exemplary embodiments by way of illustration. While these exemplary embodiments are described in sufficient detail to enable those skilled in the art to practice the inventions, it should be understood that other embodiments may be realized and that logical changes and adaptations in design and construction may be made in accordance with this invention and the teachings herein. Thus, the detailed description herein is presented for purposes of illustration only and not for limitation. The scope of the invention is defined by the appended claims. For example, the steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials. In some cases, reference coordinates may be specific to each figure.

The thermoplastic panel manufacturing process, as described herein, may provide a relatively quick manufacturing process, e.g., approximately half of a cure duration of a typical thermoplastic panel manufacturing process, of a thermoplastic panel, such as the outer skin for a stiffened panel. The thermoplastic panel manufacturing process, as described herein, may provide an efficient, straightforward, manufacturing process for producing a flat thermoplastic panel, a contoured thermoplastic panel, or the like.

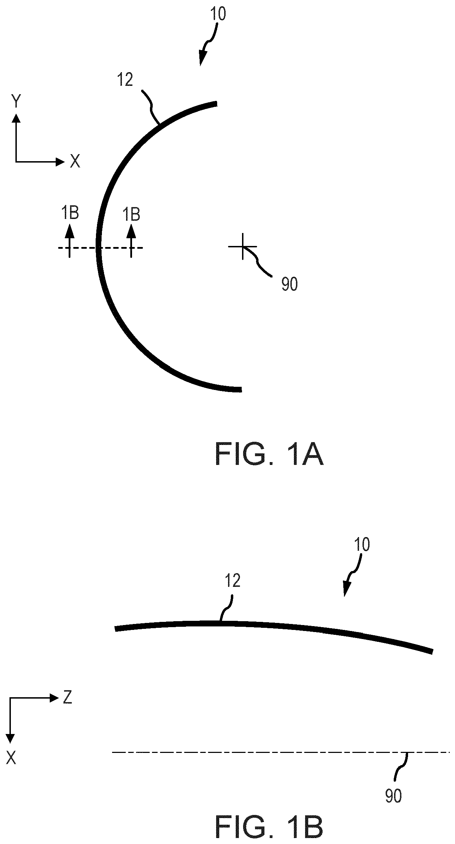

With reference to FIG. 1A, a stiffened panel half 10 is illustrated, in accordance with various embodiments. Stiffened panel half 10 may comprise an outer skin 12. Outer skin 12 may comprise a semi-cylindrical geometry when viewed from the aft direction, as shown in the illustrated embodiment. Outer skin 12 may define a centerline axis 90. Stated differently, outer skin 12 may be bent around centerline axis 90.

With reference to FIG. 1B, a section view of stiffened panel half 10 is illustrated, in accordance with various embodiments. Outer skin 12 may be contoured along the longitudinal direction (i.e., the Z-direction). Stated differently, outer skin 12 may comprise a non-linear geometry (e.g., rounded) along the longitudinal direction.

Outer skin 12 may be made from a fiber-reinforced thermoplastic material. In various embodiments, the outer skin 12 comprises a continuous reinforcing fiber and a thermoplastic resin. The reinforcing fiber to be used for the outer skin 12 has no particular limitations with respect to the type thereof, and examples thereof include metal fibers, such as an aluminum fiber, a brass fiber, and a stainless steel fiber, carbon fibers (including graphite fibers), such as polyacrylonitrile (PAN)-based carbon fibers, rayon-based carbon fibers, lignin-based carbon fibers, and pitch-based carbon fibers, insulating fibers, such as glass fiber, organic fibers, such as aramid fibers, polyparaphenylene benzoxazole (PBO) fibers, polyphenylene sulfide fibers, polyester fibers, acrylic fibers, nylon fibers, and polyethylene fibers, and inorganic fibers, such as silicon carbide fibers and silicon nitride fibers. Fibers prepared by applying surface treatment to these fibers are also available. Examples of the surface treatment include treatment with a coupling agent, treatment with a sizing agent, treatment with a binder, and adhesion treatment with an additive in addition to deposition treatment with conductive metal.

In the disclosure, the thermoplastic resin to be used for the outer skin 110 may be either crystalline or amorphous.

Examples of the crystalline thermoplastic resin include polyester, polyolefin, polyoxymethylene (POM), polyamide (PA), polyarylene sulfide, polyketone (PK), polyetherketone (PEK), polyether ether ketone (PEEK), polyether ketone ketone (PEKK), polyvinylidene fluoride (PVDF), polytetrafluoroethylene (PTFE), polyaryletherketone (PAEK), polyether nitrile (PEN), fluororesin, and liquid crystal polymer (LCP). Examples of the polyester include polyethylene terephthalate (PET), polybutylene terephthalate (PBT), polytrimethylene terphthalate (PTT), polyethylene naphthalate (PEN), and liquid crystal polyester. Examples of the polyolefin include polyethylene (PE), polypropylene (PP), and polybutylene. Examples of the polyarylene sulfide include polyphenylene sulfide (PPS). Examples of the fluororesin include polytetrafluoroethylene.

Examples of the amorphous thermoplastic resin include polystyrene, polycarbonate (PC), polymethyl methacrylate (PMMA), polyvinyl chloride (PVC), polyphenylene ether (PPE), polyimide (PI), polyamide imide (PAI), polyetherimide (PEI), polysulfone (PSU), polyether sulfone (PES), and polyarylate (PAR). The thermoplastic resin to be used for the outer skin 110 also may be phenoxy resin, polystyrene, polyolefin, polyurethane, polyester, polyamide, polybutadiene, polyisoprene, fluorine resin, acrylonitrile, and other thermoplastic elastomers, and copolymers and modified resin thereof.

Although described herein with respect to a stiffened panel and an outer skin, and a fiber-reinforced thermoplastic material, the present disclosure is not limited in this regard. For example, a thermoplastic panel, flat or countered, made of a thermoplastic material comprising only a thermoplastic resin is within the scope of this disclosure. In various embodiments, the thermoplastic material is made of a crystalline thermoplastic resin.

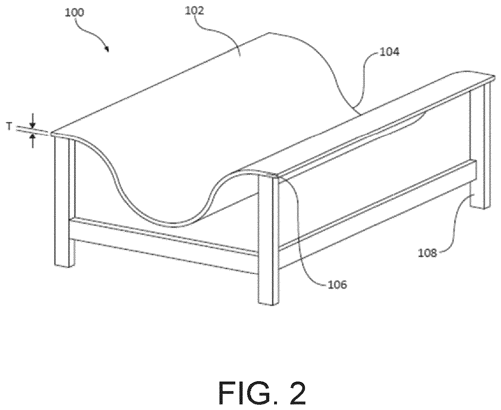

With reference to FIG. 2, a bonding tool 100 with an invar mold 102 having layup surface 104 is shown, in accordance with various embodiments. Invar mold 102 may include a layup surface 104 with a contour in the shape of a part to be produced. Although illustrated as having a contoured shape, a flat shape is also within the scope of this disclosure. Supports 108 may provide support for bonding tool 100. Invar mold 102 may have a sidewall 106 of thickness T. Invar mold 102 may have a substantially uniform thickness such that the thickness of invar mold 102 at any point may be approximately equal to thickness T. Thickness T may be a thickness from one half inch (1.3 cm) to six inches (15.2 cm). For example, thickness T may be approximately one inch (2.5 cm).

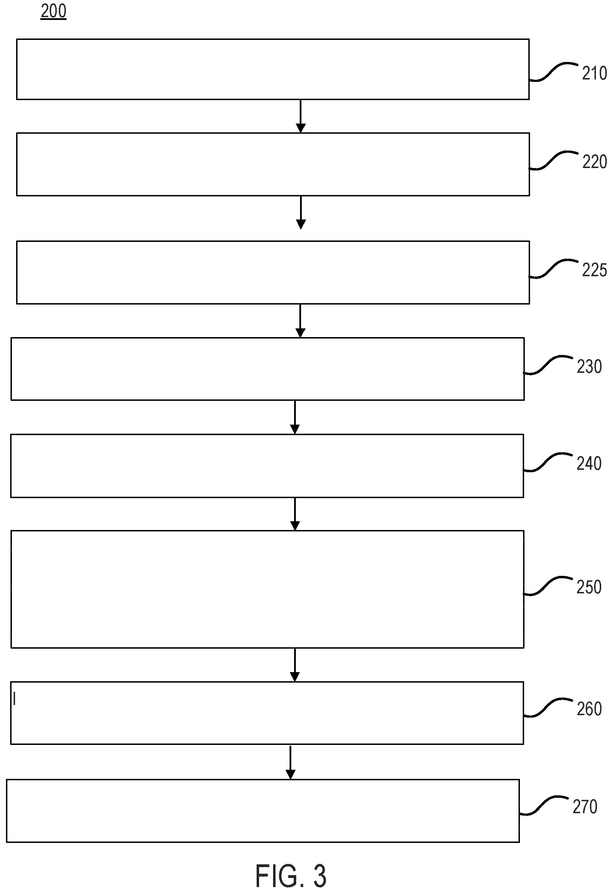

With reference to FIG. 3, a method 200 for manufacturing a thermoplastic panel is provided, in accordance with various embodiments. Method 200 includes tacking together a plurality of plies of material comprising thermoplastic resin and fiber to form a panel preform (step 210). Method 200 includes laying up the panel preform with a consolidation assembly (step 220).

Method 200 includes generating a vacuum environment within the consolidation assembly (step 225). Method 200 includes heating the panel preform from a first temperature (e.g., between 0 °F (-18 °C) and 100 °F (38 °C)) to a first cure temperature (step 230). Stated another way, the method 200 may comprise applying heat for a first time period to take the temperature from the first temperature to the first cure temperature. The first cure temperature is between 500 °F (260 °C) and 600 °F (316 °C), or approximately 545 °F (285 °C). In various embodiments a rate of temperature increase of step 230 may be between 10 °F (5.6 °C) and 20 °F (11.2 °C) per minute, or approximately 15 °F (8.3 °C). Method 200 includes heating the panel preform at the first cure temperature for a first time period (e.g., a first dwell period) (step 240). The first time period is between 5 minutes and 60 minutes, or approximately 30 minutes. Method 200 includes heating the panel preform from the first cure temperature to a second cure temperature (step 250). The second cure temperature is between 600 °F (316 °C) and 800 °F (427 °C), or approximately 715 °F (316 °C). Method 200 includes heating the panel preform at the second cure temperature for a second time period (e.g., a second dwell period) (step 260). The second time period is between 5 minutes and 60 minutes, or approximately 30 minutes. Method 200 includes cooling the panel (step 270). Cooling the panel may be by exposing the panel to ambient conditions, or active cooling. The present disclosure is not limited in this regard. In various embodiments, steps 230 - 270 are all performed within the consolidation assembly as described further herein. In various embodiments, method 200 may be faster and less expensive relative to typical thermoplastic panel manufacturing processes, such as curing via an oven or the like. In various embodiments, the method 200 may facilitate manufacturing of smaller thermoplastic, panels or components, that can be utilized in repairs or the like.

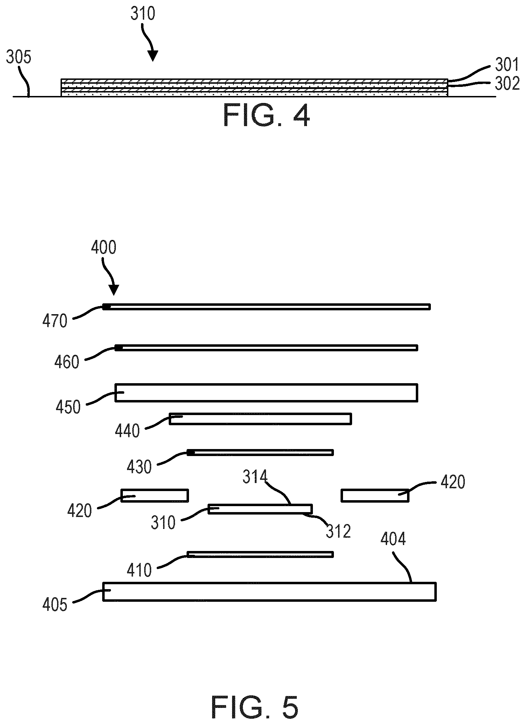

With combined reference to FIG. 3 and FIG. 4, step 210 may include stacking plies of fiber sheets 301 and thermoplastic resin sheets 302 to a desired thickness to form a panel preform 310 (also referred to herein as a preform). In various embodiments, and for ease of handling, the sheets 301, 302 may be stacked on a substantially planar surface 305. In various embodiments, with brief reference to FIG. 5, the sheets 301, 302 may be stacked during laying up of the consolidation assembly 400 on an invar mold 405. The present disclosure is not limited in this regard. In various embodiments, the resin sheets 302 may be "tacky" at a room temperature. Therefore, the resin sheets 302 may be "tacked" or stick to adjacent fiber sheets 301 without adding additional heat. However, in various embodiments, local heat may be applied to tack the resin sheets 302 and fiber sheets 301 together to form a flat sheet of material. Various methods may be used to tack together the stack of sheets to hold the sheets in place with respect to each other without departing from the scope of the present disclosure, such as clamping and ultrasonic welding, among others. Furthermore, any number of plies of fiber sheets 301 and/or resin sheets 302 may be used depending on the desired thickness of the fiber-reinforced thermoplastic panel. Furthermore, the thickness of the panel may vary. In this regard, a first location of the panel may have a first number of plies and a second location of the panel may have a second number of plies, different from the first number of plies. After the panel preform 310 has been formed, the panel preform 310 may be laid up on a consolidation assembly 400 (see FIG. 5).

With combined reference to FIG. 3 and FIG. 5, step 220 may include laying up the panel preform 310 to form a consolidation assembly 400 (step 220). In this manner, the consolidation assembly 400 includes an invar mold 405. In various embodiments, the invar mold 405 may be in accordance with the invar mold 102 from FIG. 1. In various embodiments, the invar mold 405 may be substantially flat. "Substantially flat" as referred to herein includes a flatness (e.g,. a variance from a reference plane) of less than 0.10 inches (0.25 cm), or less than 0.05 inches (0.13 cm), or less than 0.01 inches (0.025 cm). For the sake of brevity, the method 200 and stack up of the consolidation assembly 400 described herein will be described with respect to a square panel. However, the present disclosure is no way limited in this regard.

The consolidation assembly 400 further comprises a release agent 410 (i.e., a solvent-based moisture-curing release epoxy such as that sold under the mark LOCTITE^{®} Frekote 700NC). The release agent 410 is disposed directly on the layup surface 404, followed by the panel preform 310. The release agent 410 may define a cross-sectional area that is greater than a cross sectional area of the panel preform 310 in the stack up. For example, if the panel preform 310 is a 12 inch (30.5 cm) x 12 inch (30.5 cm) panel, the release agent 410 may cover a cross-sectional area of approximately 14 inches (36 cm) x 14 inches (36 cm), in accordance with various embodiments. In this regard, an entire mating surface of the panel preform 310 is in contact with the release agent 410. For a contoured shape, the cross-sectional area referred to herein is through a cross-section along a plane defined through a thickness of a respective component. Stated another way, the cross-sectional area is a surface area of a mating surface, in accordance with various embodiments.

The consolidation assembly 400 further comprises an ultra-high temperature (UHT) breather frame 420. The UHT breather frame 420 may enclose a perimeter of the panel preform 310 (e.g., the breather frame 420 may be disposed about an entirety of a perimeter of the panel preform 310). For example, if the panel preform 310 is a 12-inch (30.5 cm) x 12-inch (30.5 cm) panel, the UHT breather frame 420 may define an opening with an cross-sectional area of approximately 14 inches (36 cm) x 14 inches (36 cm). In various embodiments, the opening defined by the UHT breather frame 420 may be approximately equal to the cross-sectional area of the release agent 410. The present disclosure is not limited in this regard.

The UHT breather frame 420 may be any UHT breather frame, such as a non-woven blended, fiberglass breather sold under the trademark Airweave^{®} which can be purchased from Airtech International, Inc. located in Huntington Beach CA. The UHT breather frame 420 may facilitate release of trapped air during the consolidation process defined in steps 230-270 from method 200. In various embodiments, the UHT breather frame 420 provides efficient breathing during the method 200 from FIG. 3 for temperatures up to and including 800 °F (430 °C).

The consolidation assembly 400 further comprises a release film 430. During step 220 of method 200, the release film 430 is applied to a mating surface 314 of the panel preform 310. The mating surface 314 is opposite a mating surface 312 in contact with the release agent 410. Thus, the panel preform 310 is disposed between (i.e., in a thickness direction) the release agent 410 and the release film 430. In various embodiments, the release agent 410 and the release film 430 may comprise the same material. In various embodiments, the release agent 410 and the release film 430 may be different materials. For example, the release film 430 may comprise a high-performance polymeric material, such as a polyimide material (e.g., sold under the name Thermalide RCBS which can be purchased from Airtech International, Inc. located in Huntington Beach CA).

The consolidation assembly 400 further comprises a caul plate 440 disposed on top of the release film 430. In this regard, caul plate 440 and the invar mold 405 sandwich the panel preform 310 therebetween with release film 430 and release agent 410 preventing any contact between the invar mold 405 or the caul plate 440 and the panel preform 310, thus promoting an efficient consolidation process as outlined in steps 230-270 of method 200.

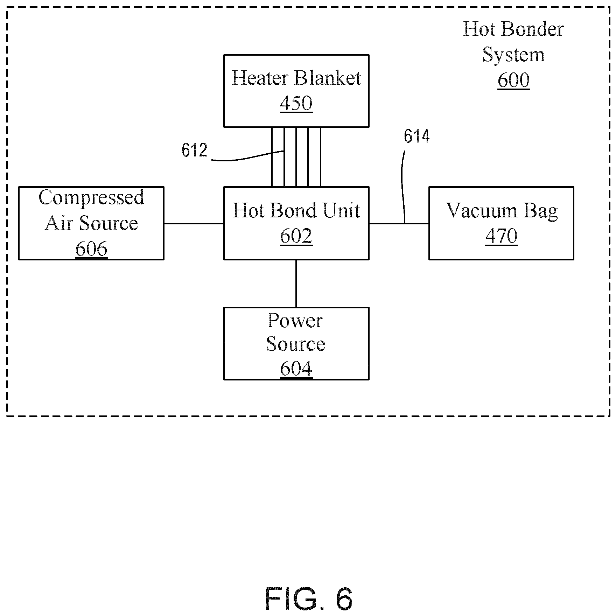

The consolidation assembly 400 further comprises a heated blanket 450. As described further herein, the heated blanket 450 is coupled to a hot bond unit. The heated blanket 450 may supply the heat during consolidation as defined in steps 230-270 of method 200. The hot bond unit (e.g., hot bond unit 602 from FIG. 6) may be configured to heat up the heated blanket 450 and supply a vacuum within the consolidation assembly 400 as described further herein.

The consolidation assembly 400 further comprises a vacuum bag 470 including a high temperature vacuum bagging material (e.g., polyimide bagging film, nylon bagging film, polyethylene bagging film, elastomeric bagging film, etc.). The consolidation assembly further comprises a UHT breather 460 disposed between the heated blanket 450 and a vacuum bag 470. The vacuum bagging material and the invar mold 405 fully encloses the remaining components of the consolidation assembly 400. In this regard, the vacuum bag 470 is configured to facilitate a vacuum environment within the consolidation assembly 400 during steps 230-270 of method 200 as described further herein.

Referring now to FIG. 6, a hot bonder system 600 for use with the consolidation assembly 400 is illustrated, in accordance with various embodiments. The hot bonder system 600 comprises a hot bond unit 602 in electrical communication with the heated blanket 450 (e.g., via thermocouples 612) and in fluid communication with the vacuum bag 470. The hot bond unit 602 is configured to heat the heated blanket 450 via the thermocouples 612 from power supplied by the power source 604. Additionally, the hot bond unit 602 is configured to create a vacuum environment within the vacuum bag 470 of the consolidation assembly 400 from FIG. 5 via compressed air source 606 creating a vacuum in the vacuum fluid line 614.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the inventions. The scope of the inventions is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.
Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method of manufacturing a thermoplastic panel, the method comprising:
tacking together a plurality of plies of material comprising thermoplastic resin and fiber to form a panel preform;
laying up a release agent (410) directly on a layup surface (104; 404) of an invar mold (102; 405), the release agent comprising a solvent-based moisture-curing release epoxy;
laying up the panel preform on the release agent (410) such that an entire first mating surface (312) of the panel preform is in contact with the release agent (410);
laying up a release film (430) on a second mating surface (314) of the panel preform, the second mating surface (314) opposite the first mating surface (312) in contact with the release agent (410);
at least partially enclosing the panel preform within a breather frame (420);
laying up a caul plate (440), the panel preform disposed between the caul plate (440) and the invar mold (102; 405);
laying up a heated blanket (450) on the caul plate (440), the heated blanket (450) coupled to a hot bond unit;
laying up a breather on the heated blanket (450) prior to enclosing the panel preform within a vacuum bag (470) and the invar mold (102; 405);
enclosing the panel preform within the vacuum bag (470) and the invar mold (102; 405), wherein the vacuum bag (470) and the invar mold (102; 405) fully encloses the remaining components of a consolidation assembly (400), the consolidation assembly (400) comprising: the breather (460);
the invar mold (102; 405);
the release agent (410);
the breather frame (420);
the release film (430);
the caul plate (440), the caul plate (440) disposed on top of the release film (430);
the heated blanket (450); and
the vacuum bag (470);
generating a vacuum environment within the consolidation assembly (400);
heating the heated blanket (450) to a first cure temperature, wherein the first cure temperature is between 500 °F (260 °C) and 600 °F (316 °C);
heating the panel preform at the first cure temperature for a first time period, wherein the first time period is between 5 minutes and 60 minutes;
heating the panel preform from the first cure temperature to a second cure temperature, the second cure temperature between 600 °F (316 °C) and 800 °F (427 °C); and
heating the panel preform at the second cure temperature for a second time period, the second time period between 5 minutes and 60 minutes.

2. The method of manufacturing of claim 1, wherein the vacuum environment is generated from a hot bonder system (600).

3. The method of manufacturing of claim 2, wherein the heated blanket (450) is heated via the hot bonder system (600).

4. The method of any preceding claim, further comprising forming the thermoplastic panel in response to heating the thermoplastic panel preform.

5. The method of any preceding claim, further comprising cooling the thermoplastic panel.

## Patentansprüche

1. Verfahren zum Herstellen eines thermoplastischen Paneels, wobei das Verfahren umfasst:
Zusammenheften einer Mehrzahl von Lagen aus Material, das thermoplastisches Harz und Faser umfasst, zum Formen eines Paneelvorformlings;
Auflegen eines Trennmittels (410) direkt auf eine Auflegefläche (104; 404) einer Invarform (102; 405), wobei das Trennmittel ein lösungsmittelbasiertes feuchtigkeitshärtendes Trennepoxid umfasst;
Auflegen des Paneelvorformlings auf das Trennmittel (410), so dass eine gesamte erste Passfläche (312) des Paneelvorformlings in Kontakt mit dem Trennmittel (410) ist;
Auflegen einer Trennfolie (430) auf eine zweite Passfläche (314) des Paneelvorformlings, wobei die zweite Passfläche (314) der mit dem Trennmittel (410) in Kontakt stehenden ersten Passfläche (312) gegenüberliegt;
zumindest teilweises Einschließen des Paneelvorformlings innerhalb eines Entlüftungsvliesrahmens (420);
Auflegen einer Druckplatte (440), wobei der Paneelvorformling zwischen der Druckplatte (440) und der Invarform (102; 405) angeordnet ist;
Auflegen einer Heizdecke (450) auf die Druckplatte (440), wobei die Heizdecke (450) mit einer Hot-Bond-Einheit gekoppelt ist;
Auflegen eines Entlüftungsvlieses auf die Heizdecke (450) vor dem Einschließen des Paneelvorformlings innerhalb eines Vakuumsacks (470) und der Invarform (102; 405);
Einschließen des Paneelvorformlings innerhalb des Vakuumsacks (470) und der Invarform (102; 405), wobei der Vakuumsack (470) und die Invarform (102; 405) die verbleibenden Komponenten einer Konsolidierungsbaugruppe (400) vollständig einschließen, wobei die Konsolidierungsbaugruppe (400) umfasst: das Entlüftungsvlies (460);
die Invarform (102; 405);
das Trennmittel (410);
den Entlüftungsvliesrahmen (420);
die Trennfolie (430);
die Druckplatte (440), wobei die Druckplatte (440) oben auf der Trennfolie (430) angeordnet ist;
die Heizdecke (450); und
den Vakuumsack (470);
Erzeugen einer Vakuumumgebung innerhalb der Konsolidierungsbaugruppe (400);
Erwärmen der Heizdecke (450) auf eine erste Aushärtetemperatur, wobei die erste Aushärtetemperatur zwischen 500 °F (260 °C) und 600 °F (316 °C) liegt;
Erwärmen des Paneelvorformlings bei der ersten Aushärtetemperatur für einen ersten Zeitraum, wobei der erste Zeitraum zwischen 5 Minuten und 60 Minuten liegt;
Erwärmen des Paneelvorformlings von der ersten Aushärtetemperatur auf eine zweite Aushärtetemperatur, wobei die zweite Aushärtetemperatur zwischen 600 °F (316 °C) und 800 °F (427 °C) liegt; und
Erwärmen des Paneelvorformlings bei der zweiten Aushärtetemperatur für einen zweiten Zeitraum, wobei der zweite Zeitraum zwischen 5 Minuten und 60 Minuten liegt.

2. Verfahren zum Herstellen nach Anspruch 1, wobei die Vakuumumgebung von einem Hot-Bonder-System (600) erzeugt wird.

3. Verfahren zum Herstellen nach Anspruch 2, wobei die Heizdecke (450) über das Hot-Bonder-System (600) erwärmt wird.

4. Verfahren nach einem der vorhergehenden Ansprüche, ferner umfassend Formen des thermoplastischen Paneels als Reaktion auf Erwärmen des thermoplastischen Paneelvorformlings.

5. Verfahren nach einem der vorhergehenden Ansprüche, ferner umfassend Abkühlen des thermoplastischen Paneels.

## Revendications

1. Procédé de fabrication d'un panneau thermoplastique, le procédé comprenant :
l'assemblage par collage d'une pluralité de couches de matériau comprenant de la résine thermoplastique et de la fibre pour former une préforme de panneau ;
la stratification d'un agent de démoulage (410) directement sur une surface de stratification (104 ; 404) d'un moule en invar (102 ; 405), l'agent de démoulage comprenant un époxy de démoulage à base de solvant durcissant à l'humidité ;
la stratification de la préforme de panneau sur l'agent de démoulage (410) de telle sorte qu'une première surface d'accouplement (312) entière de la préforme de panneau est en contact avec l'agent de démoulage (410) ;
la stratification d'un film de démoulage (430) sur une seconde surface d'accouplement (314) de la préforme de panneau, la seconde surface d'accouplement (314) opposée à la première surface d'accouplement (312) en contact avec l'agent de démoulage (410) ;
l'enfermement au moins partiel de la préforme de panneau au sein d'un cadre de reniflard (420) ;
la stratification d'une plaque de presse (440), la préforme de panneau disposée entre la plaque de presse (440) et le moule en invar (102 ; 405) ;
la stratification d'une couverture chauffante (450) sur la plaque de presse (440), la couverture chauffante (450) étant accouplée à une unité de liaison à chaud ;
la stratification d'un reniflard sur la couverture chauffante (450) avant d'enfermer la préforme de panneau au sein d'un sac sous vide (470) et du moule en invar (102 ; 405) ;
l'enfermement de la préforme de panneau au sein du sac sous vide (470) et du moule en invar (102 ; 405), dans lequel le sac sous vide (470) et le moule en invar (102 ; 405) enferment entièrement les composants restants d'un ensemble de consolidation (400), l'ensemble de consolidation (400) comprenant : le reniflard (460) ;
le moule en invar (102 ; 405) ;
l'agent de démoulage (410) ;
le cadre de reniflard (420) ;
le film de démoulage (430) ;
la plaque de presse (440), la plaque de presse (440) disposée sur le dessus du film de démoulage (430) ;
la couverture chauffante (450) ; et
le sac sous vide (470) ;
la génération d'un environnement sous vide au sein de l'ensemble de consolidation (400) ;
le chauffage de la couverture chauffante (450) à une première température de durcissement, dans lequel la première température de durcissement est comprise entre 500 °F (260 °C) et 600 °F (316 °C) ;
le chauffage de la préforme de panneau à la première température de durcissement pendant une première période, dans lequel la première période est comprise entre 5 minutes et 60 minutes ;
le chauffage de la préforme de panneau de la première température de durcissement à une seconde température de durcissement, la seconde température de durcissement étant comprise entre 600 °F (316 °C) et 800 °F (427 °C) ; et
le chauffage de la préforme de panneau à la seconde température de durcissement pendant une seconde période, la seconde période étant comprise entre 5 minutes et 60 minutes.

2. Procédé de fabrication selon la revendication 1, dans lequel l'environnement sous vide est généré par un système de collage à chaud (600).

3. Procédé de fabrication selon la revendication 2, dans lequel la couverture chauffante (450) est chauffée par l'intermédiaire du système de collage à chaud (600).

4. Procédé selon une quelconque revendication précédente, comprenant en outre la formation du panneau thermoplastique en réponse au chauffage de la préforme de panneau thermoplastique.

5. Procédé selon une quelconque revendication précédente, comprenant en outre le refroidissement du panneau thermoplastique.
